Europäisches Patentamt

European Patent Office

Office européen des brevets

(19)

(11) Veröffentlichungsnummer: **0 327 499 B1**

# EUROPÄISCHE PATENTSCHRIFT

(12)

(45) Veröffentlichungstag der Patentschrift :
08.01.92 Patentblatt 92/02

(51) Int. Cl.⁵: **G01N 21/47, G02B 19/00, G02B 17/06, G02B 27/00**

(21) Anmeldenummer: 89810061.5

(22) Anmeldetag: 24.01.89

(54) Messkopf.

(30) Priorität: 02.02.88 CH 360/88

(43) Veröffentlichungstag der Anmeldung:
09.08.89 Patentblatt 89/32

(45) Bekanntmachung des Hinweises auf die
Patenterteilung :
08.01.92 Patentblatt 92/02

(84) Benannte Vertragsstaaten :
CH DE FR GB IT LI

(56) Entgegenhaltungen :
DE-A- 2 258 923
FR-A- 1 527 717
GB-A- 2 181 265
US-A- 3 244 062
US-A- 4 025 200
US-A- 4 076 421
US-A- 4 078 858

(73) Patentinhaber : GRETAG Aktiengesellschaft
Althardstrasse 70
CH-8105 Regensdorf (CH)

(72) Erfinder : Mast, Fred, Dr.
Fürstenlandstrasse 15
CH-9500 Wil (CH)
Erfinder : Knus, Jean A.
Baslerstrasse 111
CH-8048 Zürich (CH)

(74) Vertreter : Kleewein, Walter, Dr. et al
Patentabteilung CIBA-GEIGY AG Postfach
CH-4002 Basel (CH)

EP 0 327 499 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 327 499 B1

## Beschreibung

Die Erfindung betrifft einen Meßkopf gemäß dem Oberbegriff des Anspruchs 1.

Ein derartiger Meßkopf mit einer Projektionsoptik zur Beleuchtung einer Meßfläche und mit einer Meßoptik für das remittierte Meßlicht ist aus der US-A-4078858 bekannt und verfügt über eine Glühlampe, der zur Erzeugung eines Meßflecks eine Kollimatorlinse und ein Umlenkspiegel sowie eine weitere Sammellinse zugeordnet sind. Das vom Meßfleck unter 45° remittierte Licht gelangt in die Meßoptik, die den sphärischen Ringspiegel und den flachen ringförmigen Spiegel aufweist.

Die US-A-3982824 lehrt ein Spiegelsystem für elektromagnetische Strahlung oder Schallstrahlung, bei dem zur Vermeidung der Abschattung und achromatischen Aberration ein Primärspiegel und ein Sekundärspiegel zusammenwirken. Die Spiegelflächen des Primärspiegels sind von einem um die optische Achse rotierenden Parabelabschnitt als Erzeugenden gebildet, wobei der Parabelbrennpunkt eine kreisförmige Brennlinie in einer Radialebene zu der optischen Achse des Spiegelsystemes beschreibt. Die Spiegelfläche des Sekundärspiegels des Spiegelsystems ist durch Drehen eines Teiles einer Ellipse um die Systemachse gebildet, wobei ein Brennpunkt der Ellipse auf der optischen Achse liegen bleibt, während der zweite Brennpunkt der Ellipse in einer kreisförmigen Brennlinie um die optische Achse des Spiegelsystems wandert, wenn die Ellipse rotiert. Sämtliche Axialstrahlen, welche auf den Primärspiegel treffen, werden bei dem bekannten Linsensystem an dem Brennpunkt des Sekundärspiegels gesammelt. Axialstrahlen, welche unmittelbar auf den Sekundärspiegel auftreffen werden in Richtung auf die optische Achse des Systems reflektiert und gelangen nicht zum Brennpunkt der Ellipse. Axiale Strahlen, die von einer punktförmigen Strahlungsquelle in einem großen Abstand von dem bekannten Spiegelsystem ausgehen, werden in vollkommener Weise fokussiert, so daß das Spiegelsystem nur für solche Strahlen eine fehlerfreie Abbildung ergibt.

Eine Reflektoranordnung zum Konzentrieren der von einer stabförmigen Blitzlampe ausgehenden Strahlung auf einen parallel zur Blitzlampe verlaufenden Stab aus einem Lasermaterial ist in der GB-A 281265 beschrieben. Die Reflektoranordnung des optisch gepumpten Lasers ist als parallel zu den Längsachsen der Blitzlampe und des Laserstabes ausgerichteter Zylinder ausgebildet, der im Querschnitt im wesentlichen die Gestalt einer Ellipse hat, deren Brennpunkte bzw. Brennlinien einerseits durch die Blitzlampe und andererseits durch den Laserstab verlaufen. Um die bei einem reinen elliptischen Querschnitt auftretende Abschattung im Bereich der Hauptscheitel der Ellipsenform zu vermeiden, ist der Querschnitt des ellipsenförmigen zylindrischen Reflektors im Bereich der beiden Hauptscheitel speziell geformt, um das bei einem normalen ellipsenförmigen Spiegel in einen toten Winkel abgestrahlte Licht aufzufangen und zum Schnittpunkt der Nebenachse der Ellipse mit der Spiegelfläche zu reflektieren oder von dort aufzufangen. Dies wird dadurch erreicht, daß im Bereich der Hauptscheitel der Ellipsenform eine abweichende Ellipsenform vorgesehen ist, deren erster Brennpunkt mit der Längsachse der Blitzlampe bzw. des Laserstabes zusammenfällt und deren zweiter Brennpunkt dort liegt, wo die Nebenachse der Hauptellipse die Reflektorfläche schneidet. Die Querschnittsform dieses zylindrischen Reflektors entsteht somit durch Überlagerung einer Hauptellipse mit vier Nebenellipsen, wobei die Ellipsenflächen alle in der gleichen Ebene liegen.

Eine Vorrichtung zum Erfassen der optischen Dichte von Photographien, die in der US-A-3244062 beschrieben ist, verfügt über einen Meßkopf mit einer Projektionsoptik, die das Licht einer Glühlampe auf das photographische Material abbildet, und mit einer Meßoptik, die das im wesentlichen vertikal von der photographischen Oberfläche zurückgestreute Licht über einen Umlenkspiegel quer zur optischen Achse der Projektionsoptik auskoppelt und mit Hilfe einer Linse den Eingangsspalt eines Photoelektronen-Vervielfachers beaufschlagt. Die Projektionsoptik gestattet es, den Meßfleck unter einem Einfallswinkel von im wesentlichen 45° allseitig mit dem von der Glühlampe im Meßkopf stammenden Licht zu beaufschlagen. Die der Glühlampe zugeordnete Projektionsoptik enthält einen sphärischen Ringspiegel, der die Glühlampe umgibt, wobei der Glühfaden der Glühlampe sich entlang der optischen Achse des sphärischen Ringspiegel erstreckt. Das vom sphärischen Ringspiegel parallel zur optischen Achse der Projektionsoptik ausgehende Lampenlicht wird mit Hilfe eines einfachen ringförmigen Spiegels auf die Meßfläche fokussiert. Die Qualität der Projektionsoptik und der Meßoptik der bekannten Vorrichtung ist für einfache Dichtemessungen bei der Bestimmung von optischen Remissionseigenschaften ausreichend.

Aus der US-A-4025200 ist eine Projektionsoptik für Laserlicht eines Densitometers oder Spektralphotometers bekannt. Das Laserlicht wird mit Hilfe eines quer zur Strahlrichtung ausgerichteten transparenten Rohres entlang einer rechtwinklig zur Rohrachse verlaufenden Ebene aufgeweitet. Nach dem Durchqueren einer Blende wird mit Hilfe einer zylindrischen Linse quer zur Aufweitungsrichtung eine Strahlbündelverengung bewirkt, um ein Abtaststrahlbündel zu erzeugen, wobei die Breite des Strahlenbündels justiert werden kann, wenn der Abstand der zylindrischen Linse zum abzutastenden Objekt verändert wird.

Der Aufbau eines Spektralphotometers mit einer zeitlich parallelen Auswertung des Remissionsspektrums bewegter Meßflächen ist in der US-A-4076421 erörtert. Das Licht einer Xenon-Blitzlichtlampe gelangt in den

2

Innenraum einer mit einem diffus reflektierenden Überzug versehenen Ulbricht Kugel, in der sich auch die Meßfläche des abzutastenden Musters befindet. Über eine Lochblende in der Kugel gelangt das von der Meßfläche remittierte Licht zu einer Linse, die es auf einen Spalt fokussiert. Dem Spalt ist ein konkaves Reflektionsgitter zugeordnet, durch das eine spektrale Zerlegung des Lichtes in der Weise erfolgt, daß einzelne Photodetektoren einer zeilenförmigen Anordnung mit Licht unterschiedlicher Wellenlänge beaufschlagt werden. Infolge der hohen Lichtleistung der Xenon-Blitzlichtlampe können die sich bei der defusen Reflektion an der Innenseite der Kugel ergebenden Intensitätsverluste hingenommen werden.

Aus der FR-A-1527717 ist ein tragbares Reflektometer bekannt, das einen Meßkopf mit einer Glühlampe und einer Projektionsoptik sowie eine Meßoptik aufweist. Das Licht der Glühlampe beaufschlagt über ein Filter einerseits direkt einen ersten Photowiderstand und andererseits über die Projektionsoptik und die Meßoptik einen zweiten Photowiderstand. Die beiden Photowiderstände sind in einer abgleichbaren Brückenschaltung angeordnet, mit deren Hilfe die Intensität des von einer Meßfläche reflektierten Lichtes ausgewertet werden kann. Der Glühfaden der Glühbirne im Meßkopf befindet sich im Brennpunkt eines Parabolspiegels, der eine Ausnehmung für das jeweils einzusetzende Filter aufweist. Das den Parabolspiegel im wesentlichen in Richtung der optischen Achse verlassende Licht gelangt über einen konischen Lichtwellenleiter oder Kollektor aus einem lichtbrechenden Material zu einer Koppelscheibe aus lichtbrechendem Material, deren Durchmesser kleiner als der Durchmesser des Parabolspiegels und kleiner als das gegenüberliegende Ende des konischen Kollektors ist. Beim Messen ist die Koppelscheibe fest gegen die Oberfläche des zu untersuchenden Objektes angedrückt, bei dem es sich insbesondere um Lebensmittel oder Agrarprodukte handelt. Entlang der Achse weist der konische Kollektor eine zylindrische Bohrung auf, in der sich ein zylindrischer Glasstab befindet. Auf der der Koppelscheibe zugewandten Seite hat der Glasstab eine ebene Stirnfläche, die mit der Koppelscheibe verklebt ist. Am gegenüberliegenden Ende verfügt der Glasstab über eine sphärische Fläche, deren zugeordneter Brennpunkt auf der Fläche der lichtbrechenden Koppelscheibe liegt, die auf die zu untersuchende Meßfläche aufdrückbar ist. Innerhalb der Bohrung im konischen Kollektor befindet sich im Abstand von der sphärischen Oberfläche des Glasstabes der zweite Photowiderstand. Der erste, die Intensität des Ausgangslichts erfassende Photowiderstand befindet sich auf der Rückseite des mit dem Meßlicht beaufschlagten Photowiderstandes. Eine Spektralanalyse ist mit dem bekannten tragbaren Reflektometer nicht möglich, sondern lediglich eine Analyse der R emission unter Verwendung verschiedener auswechselbarer Filter.

Ausgehend von diesem Stand der Technik liegt der Erfindung die Aufgabe zugrunde, einen Meßkopf der eingangs genannten Art zu schaffen, der es gestattet, das vom Meßfleck remittierte Meßlicht mit einer ausreichenden Präzision und Intensität einem Gittermonochromator zuzuführen, zum eine Spektralanalyse des remittierten Lichtes durchführen zu können.

Diese Aufgabe wird bezüglich der Beleuchtungsoptik von den Merkmalen des kennzeichnenden Teils des Anspruchs 1 gelöst.

Zweckmäßige Ausgestaltungen und Weiterbildungen der Erfindung sind Gegenstand von Unteransprüchen.

Im folgenden wird ein Ausführungsbeispiel eines erfindungsgemäßen Meßkopfes für ein Handgerät zur Erfassung von photometrischen Daten anhand der Zeichnung näher erläutert. Es zeigen :

Fig. 1     eine Seitenansicht des mit einem erfindungsgemäßen Meßkopf ausgerüsteten Handgerätes, teilweise im Schnitt,

Fig. 2     eine Draufsicht auf das Handgerät,

Fig. 3     ein Ausführungsbeispiel für die Beleuchtungsoptik des Meßkopfes im Schnitt,

Fig. 4     eine gegenüber Fig. 3 vergrößerte Schnittdarstellung des asphärischen Spiegels der Beleuchtungsoptik zur Veranschaulichung der Formgebung der verspiegelten Fläche und

Fig. 5     ein Ausführungsbeispiel für die im Meßkopf angeordnete Meßoptik und den prinzipiellen Aufbau eines zugeordneten Monochromators mit einem Beugungsgitter im Schnitt.

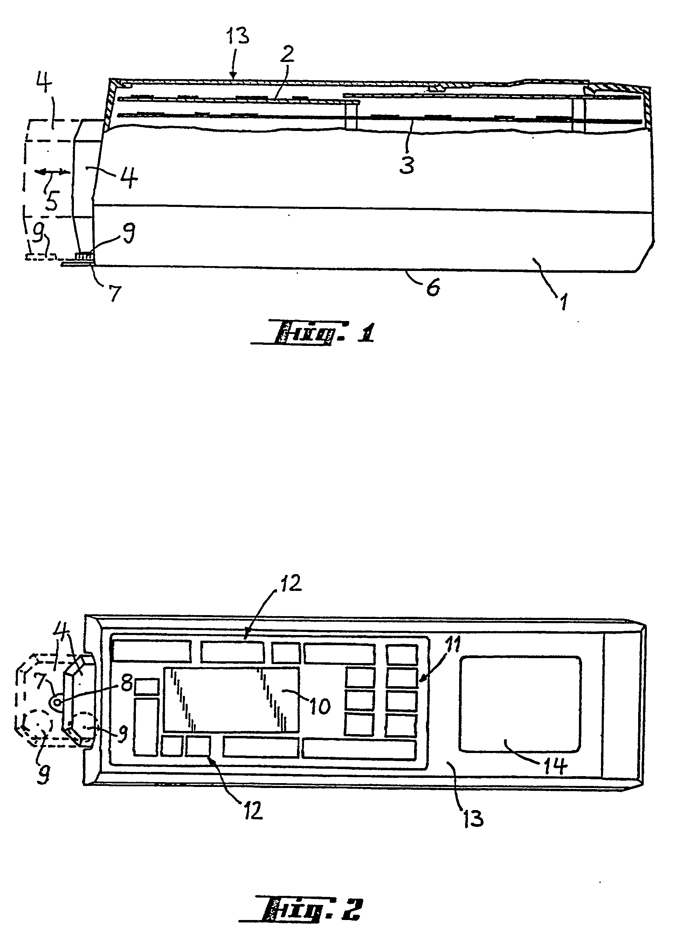

Das in Fig. 1 in einer Seitenansicht teilweise aufgeschnitten dargestellte Gerät entspricht in seinen äußeren Abmaßen einem Aufsichts-Hand-Densitometer und ist daher entsprechend kompakt aufgebaut. Im Gegensatz zu einem üblichen Densitometer gestattet es das in Fig. 1 dargestellte Handgerät jedoch, neben densitometrischen Größen auch Remissions- und Dichte-Spektren sowie farbmetrische Größen zu erfassen.

Das Handgerät verfügt über ein Gehäuse 1, in dem eine oder mehrere Printplatten 2, 3 für eine Meßwertverarbeitungs- und Steuerlogik angeordnet sind, was im oberen Teil des aufgeschnittenen Gehäuses 1 schematisch dargestellt ist.

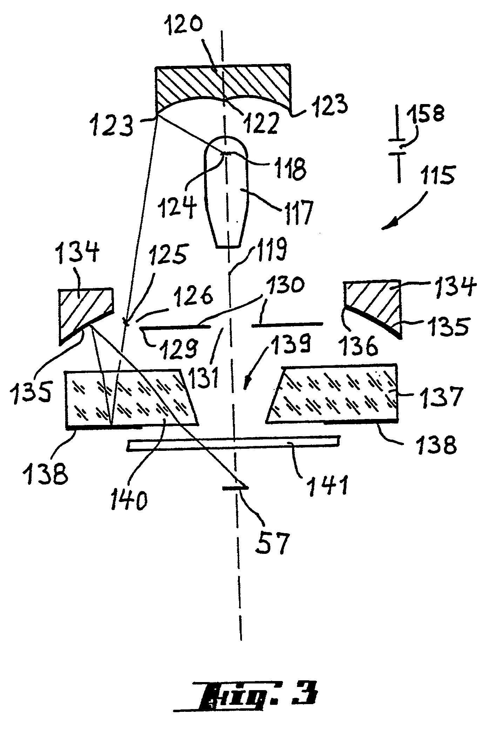

Aus der linken Seitenwand des Gehäuses 1 ragt ein Meßkopf 4 heraus, der zwischen einer in Fig. 1 mit durchgezogenen Linien dargestellten Ruhestellung und einer in Fig. 1 gestrichelt dargestellten Arbeitsstellung entlang dem Doppelpfeil 5 parallel zum Boden 6 des Gehäuses 1 verfahren werden kann. In der eingefahrenen Ruhestellung ragt eine Visierplatte 7 über den Rand des Meßkopfes 4 hinaus, was insbesondere in Fig. 2 deutlich zu erkennen ist. Die Visierplatte 7 verfügt über eine Meßblende 8, die dazu dient, die Lage und Größe eines Meßfleckes 57 des Meßkopfes 4 in der Arbeitsstellung anzuzeigen und Streulicht abzuschirmen.

Wenn der Meßkopf 4 aus der in den Fig. 1 und 2 dargestellten Ruhestellung in die in den Fig. 1 und 2 gestrichelt dargestellte Arbeitsstellung oder Meßposition ausgefahren ist, verläuft die optisch wirksame Achse des Meßkopfes 4 genau durch den Mittelpunkt der Meßblende 8.

In den Fig. 1 und 2 erkennt man weiterhin einen Filterradantrieb 9, der mit einem im Meßkopf 4 vorgesehenen Filterrad in Eingriff steht und es gestattet, in den Strahlengang des Meßkopfes 4 je nach Wunsch einen Polarisator für das Messen nasser Druckbogen, ein D65-Konversionsfilter für die Berücksichtigung der Fluoreszenz oder eine Blende ohne Filter einzubringen. Der Filterradantrieb 9 hat somit drei Positionen, die von Hand eingestellt werden, jedoch auf einem Anzeigefeld 10, beispielsweise einem Flüssigkristall-Display, dargestellt werden können.

Das Anzeigefeld 10 dient auch zur Darstellung der mit dem Handgerät erfaßten Meßwerte in numerischer Form oder in Gestalt von Spektren oder Balkendiagrammen. Zur Bedienung des Handgerätes sind um das Anzeigefeld 10 eine Reihe von Tasten einer Tastatur 11 sowie mehrere den Anzeigen auf dem Anzeigefeld 10 zugeordnete Hinweisfelder 12 vorgesehen. Das Anzeigefeld 10, die Tastatur und die Hinweisfelder 12 befinden sich auf der Oberseite 13 des Gehäuses 1, wobei auf der von dem Meßkopf 4 wegweisenden Seite eine großflächige Meßtaste 14 zum Auslösen eines Meßvorganges vorgesehen ist.

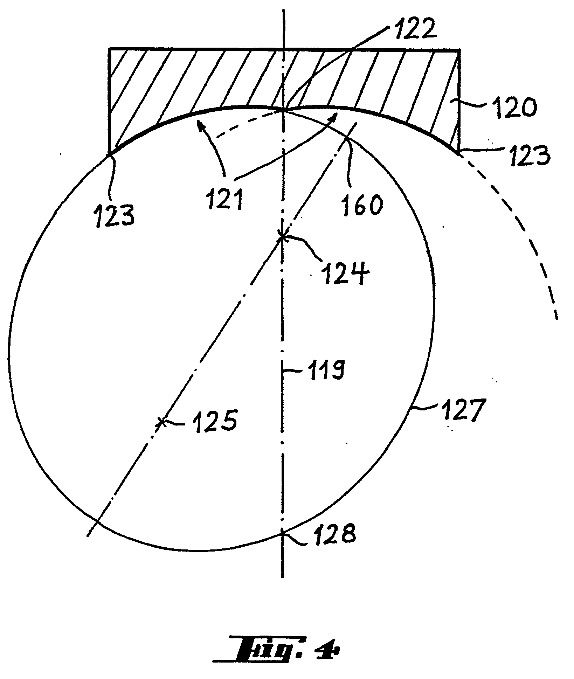

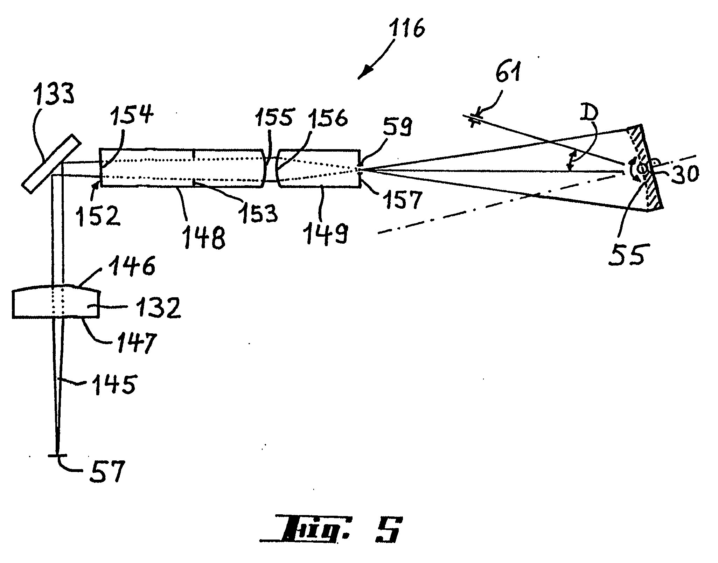

Beim Betätigen der Meßtaste 14 wird die Meßwertverarbeitungs- und Steuerlogik veranlaßt, den Meßkopf 4 aus der Ruhestellung in die Arbeitsstellung zu verfahren, um mit Hilfe einer im Innern des Gehäuses 1 vorgesehenen Spektralkammer mit einem in Fig. 5 dargestellten Beugungsgitter 55 das Spektrum des Lichtes zu erfassen, das beispielsweise von einem Druckbogen, auf dem das Handgerät ruht, an der Stelle der Meßblende 8 remittiert wird. Die Verarbeitung des Remissions-Spektrums erfolgt mit Hilfe der Meßwertverarbeitungs- und Steuerlogik. Nach dem Erfassen des Spektrums fährt der Meßkopf 4 wieder in seine Ruhestellung zurück, bis ein erneuter Meßvorgang durch Betätigen der Meßtaste 14 ausgelöst wird.

Das Verfahren des Meßkopfes 4 erfolgt mit Hilfe eines in der Zeichnung nicht dargestellten Meßwagens, der innerhalb des Gehäuses 1 längs verschieblich geführt ist.

Der Meßkopf 4 enthält eine Meßkopfoptik, die aus der in Fig. 3 dargestellten Beleuchtungsoptik 115 und der in Fig. 5 dargestellten Meßoptik 116 besteht. Fig. 5 zeigt weiterhin das Beugungsgitter 55, dessen Halterung an einer drehbaren Gitterwelle 30 befestigt ist, um durch Verdrehen der Gitterwelle 30 ein Durchstimmen des zu erfassenden Spektralbereichs auszuführen.

Die im Meßkopf 4 untergebrachte Meßkopfoptik hat einerseits die Aufgabe, den Meßfleck 57, der in den Fig. 3 und 5 durch einen Strich veranschaulicht ist, zu beleuchten, und andererseits das vom beleuchteten Meßfleck 57 remittierte Licht aufzufangen und für die spektrale Zerlegung auf das Beugungsgitter 55 zu werfen. Die in Fig. 3 dargestellte Beleuchtungsoptik gestattet es, den Meßfleck 57 unter einem Einfallswinkel von im wesentlichen 45° ± 5° allseitig mit dem von einer Glühlampe 117 stammenden Licht zu beaufschlagen, wobei das von dem Meßfleck 57 in die Meßoptik 116 zurückgestrahlte Meßlicht unter einem Meßwinkel von im wesentlichen 0° ± 5° empfangen wird. Der Durchmesser des Meßflecks 57 beträgt 3 mm. Das von der Glühlampe 117 ausgesandte Glühlampenlicht stellt eine Beleuchtung mit der Lichtart A dar, wobei die Glühlampe so ausgebildet ist, daß sie das Meßlicht mit der geforderten Farbtemperatur zur Verfügung stellt.

Die Glühlampe 117 ist im Meßkopf 4 so angeordnet, daß sich ihr Glühfaden 118 auf der Längsachse bzw. Rotationsachse 119 der rotationssymmetrisch aufgebauten Beleuchtungsoptik 115 befindet. Außerdem liegt der Glühfaden 118 in einem ersten Ellipsenbrennpunkt, der einer Asphäre 120 zugeordnet ist, die in Fig. 3 oberhalb der Glühlampe 117 dargestellt ist und ebenfalls rotationssymmetrisch aufgebaut ist. Die Asphäre 120 ist auf der zur Glühlampe 117 weisenden Seite verspiegelt und hat die in Fig. 4 vergrößert gezeigte Gestalt.

Auf der zur Glühlampe 117 weisenden verspiegelten Seite verfügt die Asphäre 120 über eine ringförmige Mulde 121 die sich um die Rotationsachse 119 erstreckt und deren Innenrand eine zentrale Erhebung 122 bildet, die auf der Rotationsachse 119 liegt. Der Außenrand 123 der Mulde 121 ragt weiter nach unten in Richtung zur Glühlampe 117 als der Innenrand mit der zentralen Erhebung 122.

Die Mulde 121 hat im Querschnitt die Gestalt eines Ellipsensegments. Fig. 4 zeigt, wie die Gestalt der Mulde 121 dadurch entsteht, daß eine Ellipse 127 mit ihrem ersten Brennpunkt 124 auf die Mittellängsachse bzw. Rotationsachse 119 so gelegt wird, daß der zweite Brennpunkt 125 von der Rotationsachse 119 einen Abstand hat. Die Lage des zweiten Brennpunkts 125 ergibt sich aus dem Abstand einer ringförmigen Pupille 126, die in Fig. 3 dargestellt ist. Die Mulde 121 hat diejenige Form, die entsteht, wenn die in Fig. 4 dargestellte Ellipse 127 um die Rotationsachse 119 gedreht wird, wobei die Lage des Brennpunktes 124 und die Lage des in Fig. 4 gezeigten Schnittpunktes 128 der Ellipse 127 mit der Rotationsachse 119 im Raum bei einer Drehung der Ellipse 127 fest bleiben. Die Form der Ellipse 127 ist so gewählt, daß das Verhältnis der Abstände zwischen dem Scheitelpunkt 160 und dem ersten Brennpunkt 124 einerseits und dem Scheitelpunkt 160 und dem zweiten Brennpunkt 125 andererseits sich etwa wie 1 : 3 verhält.

Das von der Asphäre 120 reflektierte Licht tritt durch die bereits erwähnte Pupille 126 hindurch, die um den Kreis ausgebildet ist, der vom zweiten Brennpunkt 125 bei der beschriebenen Rotation der Ellipse 127 ausgeführt wird. Die Pupille 126 ist an ihrem inneren Rand 129 von einem Blendenring 130 begrenzt, der eine Öffnung 131 für ein in der Zeichnung nicht dargestelltes Lichtführungsrohr aufweist, das u.a. zur Befestigung der in Fig. 5 dargestellten sphärisch/zylindrischen Linse 132 und eines Umlenkspiegels 133 dient. Durch geeignete Dimensionierung der Größe des quadratischen Glühfadens 118 (0,6 × 0,6 mm) der Glühlampe 117 wird erreicht, daß praktisch alles Licht der Glühlampe 117, das in einem Raumwinkel von ± 70° abgestrahlt wird, durch die ringförmige Pupille 126 fällt und damit der Lichtwirkungsgrad der Beleuchtungsoptik 115 sehr hoch wird. Dies ist wichtig, damit eine Glühlampe 117 mit möglichst geringer Leistung, von z.B. etwa 2 Watt, verwendet werden kann (Batteriebetrieb).

Der Blendenring 130 ist koaxial zur Rotationsachse 119 angeordnet und von einem ringförmigen Glaskörper 134 umgeben, der an seiner Unterseite eine sphärisch gewölbte, konkave Ringfläche mit einem aufgedampften sphärischen Ringspiegel 135 aufweist. Die untere Innenkante 136 des ringförmigen Glaskörpers 134 bildet die äußere Begrenzung der bereits erwähnten ringförmigen Pupille 126.

Unterhalb dem ringförmigen Glaskörper 134 ist ein Glasring 137 angeordnet, dessen zentrale Öffnung 139 sich in der von dem ringförmigen Glaskörper 134 wegweisenden Richtung konisch verengt. Auf der vom ringförmigen Glaskörper 134 wegweisenden Unterseite ist der Glasring 137 mit einer flachen ringförmigen Spiegelfläche 138 versehen. Um die konische Öffnung 139 herum weist der Glasring 137 ein ringförmiges Lichtdurchtrittsfenster 140 auf.

Wenn in den Strahlengang des Meßkopfes 4 ein Polarisator oder ein sonstiges Filter eingebracht wird, befindet sich dies an der Stelle des in Fig. 3 dargestellten Polarisators 141. Der vom Lampenlicht beleuchtete Meßfleck 57 ist in Fig. 3 unterhalb dem Glasring 137 und dem Polarisator 141 zu erkennen. Der Strahlengang des von der Glühlampe 117 ausgesandten Lichtes ist in Fig. 3 veranschaulicht und zeigt wie das Lampenlicht von der Asphäre 120 zur ringförmigen Pupille 126 reflektiert wird. Nach dem Durchgang durch die Pupille 126 durchquert das Licht den Glasring 137 und wird von der ringförmigen Spiegelfläche 138 in Richtung auf den sphärischen Ringspiegel 135 an der Unterseite des ringförmigen Glaskörpers 134 reflektiert. Der sphärische Ringspiegel 135 reflektiert das Lampenlicht zum ringförmigen Lichtdurchtrittsfenster 140. Nach dem Verlassen des Lichtdurchtrittsfensters 140 und Durchqueren des gegebenenfalls vorhandenen Polarisators 141 beaufschlagt das Lampenlicht den Meßfleck 57.

Der Fachmann erkennt, daß die beschriebene Abbildungsoptik die Asphäre 120 so auf den Meßfleck 57 abbildet, daß der Außenrand 123 der Asphäre 120 scharf auf den Rand des Meßflecks 57 abgebildet wird. Der Innenrand 122 wird dabei unscharf ins Zentrum des Meßflecks 57 abgebildet. Die Abstände und Krümmungen sind so gewählt, daß der Meßfleck 57 die gewünschte Größe von 3 mm Durchmesser erhält und der Beleuchtungswinkel von 45° ± 5° eingehalten wird.

In Fig. 3 erkennt man oben rechts in der Nähe der Glühlampe 117 eine Auskopplungsblende 158, die es gestattet, das Licht der Glühlampe 117 zu einer Lampenüberwachung auszukoppeln.

Das vom Meßfleck 57 remittierte Licht wird mit Hilfe der in Fig. 5 dargestellten Meßoptik 116 erfaßt und zur spektralen Zerlegung des remittierten Lichtes zum Beugungsgitter 55 und von dort zu einer in der Zeichnung nicht dargestellten Photodiode geführt, die über elektronische Schaltungen mit dem Eingang eines Rechners zur Auswertung der spektralen Remissionen verbunden ist.

Das vom Meßfleck 57 remittierte Lichtstrahlbündel 145 durchquert zunächst die bereits erwähnte sphärisch/zylindrische Linse 132, deren Längsachse mit der Rotationsachse 119 fluchtet, bevor es von dem Umlenkspiegel 133 rechtwinklig zur Rotationsachse 119 umgelenkt wird.

Die sphärisch/zylindrische Linse 132 verfügt auf der zum Umlenkspiegel 133 weisenden Seite über eine sphärische Oberfläche 146 und auf der zum Meßfleck 57 weisenden Unterseite über eine zylindrische Fläche 147, wobei die zugeordnete Zylinderachse rechtwinklig zur Gitterwelle 30 des Beugungsgitter 55 und parallel zur Zeichenebene sowie zur Ebene des Meßflecks 57 verläuft.

Das vom Umlenkspiegel 133 umgelenkte Lichtstrahlbündel durchquert zunächst einen ersten Glasstab 148 und danach einen zweiten Glasstab 149, bevor es über einen Eintrittsspalt 59 mit einer Breite von 0,75 mm in Querrichtung zum Eintrittsspalt 59 aufgeweitet das Beugungsgitter 55 beaufschlagt. Bei dem Beugungsgitter 55 zur spektralen Zerlegung des Lichtes handelt es sich um ein holographisches, konkaves Reflexionsgitter mit 1250 Linien/mm, das bezüglich seines Wirkungsgrades auf Blau optimiert ist. Der schematisch dargestellte Aufbau entspricht einem Monochromator.

Unter einem Winkel D von 25° gelangt das vom Beugungsgitter 55 reflektierte Licht zu einem Austrittsspalt 61 mit einer Spaltbreite von 0,75 mm und von dort zu der nicht gezeigten Photodiode. Um das ganze Spektrum zu messen, wird das Beugungsgitter 55 mit Hilfe der bereits erwähnten Gitterwelle 30 gedreht. Die Unschärfen, die durch die Eintrittsspaltbreite, die Austrittsspaltbreite und die Drehung des Beugungsgitters 55 während der Messung entstehen, erlauben eine spektrale Auflösung von 10 nm. Um die Schärfe noch etwas zu verbessern, wird das dem Rechner des Handgerätes zugeführte Signal mit einer rechnerischen Methode in der in der Bildwissenschaft üblichen Weise entfaltet.

Während der Rand des Meßflecks 57 kreisförmig ist, hat der Rand des den Eintrittsspalt 59 beaufschlagenden Lichtbündels eine elliptische Gestalt, um eine möglichst hohe Lichtausbeute zu erzielen. Durch die spezielle Art der Abbildung mit Hilfe der in Fig. 5 gezeigten optischen Komponenten wird erreicht, daß der runde Meßfleck 57 auf eine Ellipse abgebildet wird, wobei die kleine Achse der Ellipse der Spaltbreite des Eintrittsspalts 59 des Monochromators entspricht. Die große Achse der Ellipse hat eine Länge von etwa 3 mm. Dazu ist der erste Glasstab 148 nicht nur mit einer ersten Spaltblende 152 und einer sich senkrecht zur ersten Spaltblende 152 erstreckenden zweiten Spaltblende 153 versehen, sondern er verfügt weiterhin auch noch über zwei gekreuzt angeordnete zylindrische Flächen 154 und 155. Die erste zylindrische Fläche 154 an dem zur Eintrittspupille 152 weisenden Ende des ersten Glasstabs 148 verläuft im wesentlichen gekrümmt zur Papierebene der Fig. 5. Die Zylinderachse der ersten zylindrischen Fläche 154 verläuft somit parallel zur Rotationsachse 119 des Meßkopfes 4 und zur Zeichenebene der Fig. 5 sowie rechtwinklig zur Gitterwelle 30. Die erste Spaltblende 152 befindet sich an der in Fig. 5 gezeigten Stelle. Sie ist jedoch in der Zeichnung nicht erkennbar, da ihre Ränder oberhalb und unterhalb der Zeichenebene liegen, d.h. die erste Spaltblende 152 erstreckt sich in der Zeichenebene quer zur Ausbreitungsrichtung des vom Umlenkspiegel 133 reflektierten Lichtbündels.

Die Orientierung der zweiten zylindrischen Fläche 155 am zum Beugungsgitter 55 weisenden Ende des ersten Glasstabs 148 ist so gewählt, daß die der zylindrischen Fläche 155 zugeordnete Zylinderachse parallel zur Kippachse und Gitterwelle 30 des Beugungsgitters 55 verläuft.

Der zweite Glasstab 149 ist ebenfalls mit einer ersten zylindrischen Fläche 156 und einer zweiten zylindrischen Fläche 157 versehen, deren jeweils zugeordnete Zylinderachsen wie beim ersten Glasstab 148 gekreuzt zueinander verlaufen, wobei die dem Eintrittsspalt 59 zugeordnete zweite zylindrische Fläche 157 in Längsrichtung des Eintrittsspalts 157 gewölbt ist, so daß die zugeordnete Zylinderachse quer zum Eintrittsspalt 59 verläuft.

Durch eine scharfe anamorphotische Zwischenabbildung des runden Meßflecks 57 auf den Eintrittsspalt 59 und durch die getroffenen Öffnungswinkelbegrenzungen an den Spaltblenden 152 und 153 wird erreicht, daß die Eintrittspupille der Meßoptik 116 im Unendlichen liegt. Dadurch und weil der Aufpick-Fleck etwas größer ist als der Leucht-Fleck wird erreicht, daß die Meßoptik 116 in gewissem Rahmen abstandsunempfindlich ist. Unter Abstand wird dabei die Distanz zwischen der Optik und der Meßprobe verstanden.

## Patentansprüche

1. Messkopf für ein Gerät zur Erfassung von photometrischen Daten mit einer Lichtquelle (117), einer Projektionsoptik (120) zur Beleuchtung eines Messflecks (57) auf einer Messfläche, mit einem sphärischen Ringspiegel (135), einem auf einem Glasring (137) aufgebrachten flachen ringförmigen Spiegel (138) und mit einer Messoptik (116), dadurch gekennzeichnet, dass der Lichtquelle (117) auf der dem Messfleck (57) abgewandten Seite ein rotationssymmetrischer asphärischer Spiegel (120) zugeordnet ist, der auf der zur Lichtquelle (117) weisenden Seite eine ringförmige Mulde (121) aufweist, deren Querschnitt die Gestalt eines Ellipsensegments einer Ellipse (127) hat, und welcher asphärische Spiegel (120) so angeordnet ist, dass der erste Brennpunkt (124) dieser Ellipse ausserhalb des asphärischen Spiegels (120) liegend mit der auf der Symmetrieachse angeordneten Lichtquelle (117) zusammenfällt und der zweite Brennpunkt (125) dieser Ellipse seitlich gegenüber der Symmetrieachse (119) des asphärischen Spiegels (120) versetzt in einer ringförmigen Pupille (126) liegt, die im Strahlengang nach dem asphärischen Spiegel (120) folgt und deren äussere Begrenzung von dem sphärischen Ringspiegel (134, 135) und deren innere Begrenzung von einem Blendenring (130) gebildet ist, wobei sowohl der sphärische Ringspiegel (134, 135) als auch der Blendenring (130) koaxial zur Symmetrieachse (119) angeordnet sind, und dass im Strahlengang nachfolgend der Glasring (137) mit dem aufgebrachten flachen ringförmigen Spiegel (138) koaxial zur Symmetrieachse (119) so angeordnet ist, dass das durch die Pupille (126) hindurchgehende Licht durch den Glasring (137) hindurch zunächst den auf dem Glasring (137) aufgebrachten flachen ringförmigen Spiegel (138) beaufschlagt und nach Reflexion an diesem zum sphärischen Ringspiegel (135) zurückgeführt ist, welcher das Licht so reflektiert, dass es die Messfläche im Messfleck (57) beaufschlagt.

2. Messkopf nach Anspruch 1, dadurch gekennzeichnet, dass der asphärische Spiegel (120), der flache ringförmige Spiegel (138) und der sphärische Ringspiegel (135) so justiert sind, dass der Aussenrand (123) des asphärischen Spiegels (120) scharf auf den Rand des Messflecks (57) abgebildet wird, während der Innenrand (122) der Mulde (121) des asphärischen Spiegels (120) unscharf in das Zentrum des Messflecks (57) abgebildet wird.

3. Messkopf nach Anspruch 1, dadurch gekennzeichnet, dass die Messoptik (116) mehrere zylindrische Linsenflächen (147, 154, 155, 156, 157) aufweist, deren zugeordnete Zylinderachsen rechtwinklig zueinander verlaufen.

4. Messkopf nach Anspruch 3, dadurch gekennzeichnet, dass die Messoptik (116) eine auf der Länchsachse (119) des sphärischen Ringspiegels (135) und des flachen ringförmigen Spiegels (138) liegende sphärisch/zylindrische Linse (132) aufweist.

5. Messkopf nach Anspruch 4, dadurch gekennzeichnet, dass die zylindrische Fläche (147) der Linse (132) in Richtung auf den Messfleck (57) weist.

6. Messkopf nach Anspruch 4 oder 5, dadurch gekennzeichnet, dass der Messkopf durch einen Eintrittsspalt (59) hindurch einen Monochromator speist, der durch ein über eine Gitterwelle (30) drehbares Gitter (55) gebildet ist, und dass die der zylindrischen Fläche (147) der Linse (132) zugeordnete Zylinderachse senkrecht zur Gitterwelle (30) und zum Eintrittsspalt (59) verläuft.

7. Messkopf nach einem der Ansprüche 3 bis 5 und Anspruch 6, dadurch gekennzeichnet, dass im Messlichtweg ein erster Glasstab (148) angeordnet ist, der an seinen Enden zylindrische Flächen (154, 155) aufweist, deren zugeordnete Zylinderachsen rechtwinklig zueinander verlaufen.

8. Messkopf nach Anspruch 7, dadurch gekennzeichnet, dass im Messlichtweg zwischen dem ersten Glasstab (148) und dem Eintrittsspalt (59) des Monochromators ein zweiter Glasstab (149) angeordnet ist, der zwei zylindrische Flächen (156, 157) aufweist, von denen die zum Eintrittsspalt (59) weisende zylindrische Fläche (157) eine zugeordnete Zylinderachse bat, die rechtwinklig zum Eintrittsspalt (59) des Monochromators (55) verläuft, während die zweite zylindrische Fläche (156) eine zugeordnete Zylinderachse aufweist, die sich parallel zum Eintrittsspalt (59) und parallel zur Zylinderachse der benachbarten zylindrischen Fläche (155) des ersten Glasstabs (148) erstreckt.

9. Messkopf nach einem der Ansprüche 7 oder 8, dadurch gekennzeichnet, dass am Lichteintrittsende des ersten Glasstabs (148) eine erste Spaltblende (152) und im Innern des ersten Glasstabs eine dazu rechtwinklige zweite Spaltblende (153) vorgesehen ist, die sich parallel zum Eintrittsspalt (59) erstreckt.

10. Messkopf nach einem der Ansprüche 6 bis 9, dadurch gekennzeichnet, dass durch die Messoptik (116) ein runder Messfleck (57) auf eine Ellipse abgebildet wird, deren lange Achse sich in Richtung des Eintrittsspalts (59) des Monochromators (55) erstreckt, und deren kurze Achse der Breite des Eintrittsspalts (59) entspricht.

## Claims

1. Measuring head for an apparatus for determining photometric data, comprising a light source (117), optical projection means (120) for illuminating a measuring spot (57) on a measuring surface, a spherical annular mirror (135), a flat annular mirror (138) applied to a glass ring (137) and optical measuring means (116), wherein there is associated with the light source (117) on the side thereof remote from the measuring spot (57) a rotationally symmetrical, aspherical mirror (120) which has on the side thereof facing the light source (117) an annular groove (121) the cross-section of which has the shape of a segment of an ellipse (127), and which aspherical mirror (120) is so arranged that the first focal point (124) of that ellipse, located outside the aspherical mirror (120), coincides with the light source (117) arranged on the axis of symmetry, and the second focal point (125) of that ellipse is located, laterally offset with respect to the axis of symmetry (119) of the aspherical mirror (120), in an annular aperture diaphragm (126) which is downstream of the aspherical mirror (120) in the beam path and the outer boundary of which is formed by the spherical annular mirror (134, 135) and the inner boundary of which is formed by a diaphragm ring (130), both the spherical annular mirror (134, 135) and the diaphragm ring (130) being arranged coaxially with the axis of symmetry (119), and, downstream in the beam path, the glass ring (137) with the flat annular mirror (138) applied thereto is arranged coaxially with the axis of symmetry (119) in such a manner that the light passing through the aperture diaphragm (126) and through the glass ring (137) first impinges on the flat annular mirror (138) applied to the glass ring (137) and, after being reflected by that mirror, is returned to the spherical annular mirror (135) which reflects the light in such a manner that it impinges on the measuring surface at the measuring spot (57).

2. Measuring head according to claim 1, wherein the aspherical mirror (120), the flat annular mirror (138) and the spherical annular mirror (135) are aligned in such a manner that the outer edge (123) of the aspherical mirror (120) is focused on the edge of the measuring spot (57), while the inner edge (122) of the groove (121) of the aspherical mirror (120) is imaged in an unfocused manner at the centre of the measuring spot (57).

3. Measuring head according to claim 1, wherein the optical measuring means (116) comprise a plurality of cylindrical lens surfaces (147, 154, 155, 156, 157) the associated cylinder axes of which extend at right angles to each other.

7

4. Measuring head according to claim 3, wherein the optical measuring means (116) comprise a spherical/cylindrical lens (132) located on the longitudinal axis (119) of the spherical annular mirror (135) and the flat annular mirror (138).

5. Measuring head according to claim 4, wherein the cylindrical surface (147) of the lens (132) faces in a direction toward the measuring spot (57).

6. Measuring head according to claim 4 or claim 5, wherein the measuring head feeds a monochromator through an inlet slit (59), which monochromator is formed by a diffraction grating (55) which is rotatable via a grating shaft (30), and the cylinder axis associated with the cylindrical surface (147) of the lens (132) extends perpendicular to the grating shaft (30) and the inlet slit (59).

7. Measuring head according to any one of claims 3 to 5 and claim 6, wherein a first glass rod (148) is arranged in the path of the measuring light, said rod being provided at its ends with cylindrical surfaces (154, 155) the associated cylinder axes of which extend at right angles to each other.

8. Measuring head according to claim 7, wherein, between the first glass rod (148) and the inlet slit (59) of the monochromator, a second glass rod (149) is arranged in the path of the measuring light, said second glass rod having two cylindrical surfaces (156, 157) of which the cylindrical surface (157) facing toward the inlet slit (59) has an associated cylinder axis extending at right angles to the inlet slit (59) of the monochromator (55), while the second cylindrical surface (156) has an associated cylinder axis extending parallel to the inlet slit (59) and parallel to the cylinder axis of the adjacent cylindrical surface (155) of the first glass rod (148).

9. Measuring head according to claim 7 or claim 8, wherein a first slit diaphragm (152) is provided at the light inlet end of the first glass rod (148), and a second slit diaphragm (153) is provided at right angles to the first slit diaphragm, inside the first glass rod, which second slit diaphragm (153) extends parallel to the inlet slit (59).

10. Measuring head according to any one of claims 6 to 9, wherein a round measuring spot (57) is reproduced by the optical measuring means (116) on an ellipse the long axis of which extends in a direction toward the inlet slit (59) of the monochromator (55) and the short axis of which corresponds to the width of the inlet slit (59).

## Revendications

1. Tête de mesure pour un appareil de saisie de données photométriques, comportant une source lumineuse (117), une optique de projection (120) pour éclairer une tache lumineuse (57) de mesure sur une surface de mesure, ainsi qu'un miroir annulaire sphérique (135), un miroir annulaire plat (138) rapporté sur une bague de verre (137) et qu'une optique de mesure (116), tête de mesure caractérisée par le fait qu'à la source de lumière (117) correspond, du côté opposé à la tache lumineuse de mesure (57), un miroir non sphérique (120) à symétrie de rotation, qui présente, sur sa face orientée vers la source de lumière (117), un enfoncement annulaire (121) dont la section a la forme d'un segment d'ellipse (127) ce miroir non sphérique (120), à symétrie de rotation, étant disposé de façon telle que le premier foyer (124) de cette ellipse, situé à l'extérieur du miroir non sphérique (120) à symétrie de rotation, coïncide avec la source de lumière (117) disposée sur l'axe de symétrie et que le second foyer (125) de cette ellipse se trouve, décalé sur le côté par rapport à l'axe de symétrie (119) du miroir non sphérique (120), dans une pupille annulaire (126) qui vient, sur le chemin des rayons, après le miroir non sphérique (120) et dont la limite extérieure est formée par le miroir annulaire sphérique (134, 135) et dont la limite intérieure est formée par un diaphragme annulaire (130), étant précisé qu'aussi bien le miroir annulaire sphérique (134, 135) que le diaphragme annulaire (130) sont disposés coaxialement par rapport à l'axe de symétrie (119), et par le fait qu'à la suite, sur le chemin des rayons, la bague de verre (137), sur laquelle est rapporté le miroir annulaire plat (138), est disposée, coaxialement à l'axe de symétrie (119), de façon telle que la lumière passée à travers la pupille (126), après avoir traversé la bague de verre (137), tombe tout d'abord sur le miroir annulaire plat (138) rapporté sur la bague (137) de verre et, après réflexion sur celui-ci, est renvoyée en direction du miroir annulaire sphérique (135), qui réfléchit la lumière de façon telle qu'elle tombe sur la surface de mesure dans la tache lumineuse de mesure (57).

2. Tête de mesure selon la revendication 1, caractérisée par le fait que le miroir asphérique (120), le miroir annulaire plat (138) et le miroir annulaire sphérique (135) sont ajustés de façon telle que le bord extérieur (123) du miroir non sphérique (120) donne une image nette sur le bord de la tache lumineuse de mesure (57) tandis que le bord intérieur (122) de l'enfoncement (121) du miroir non sphérique (120) donne une image floue au centre de la tache lumineuse de mesure (57).

3. Tête de mesure selon la revendication 1, caractérisée par le fait que l'optique de mesure (116) présente plusieurs surfaces de lentille cylindrique (147, 154, 155, 156, 157) dont les axes des cylindres correspondants sont orientés perpendiculairement l'un à l'autre.

4. Tête de mesure selon la revendication 3, caractérisée par le fait que l'optique de mesure (116) présente une lentille (132) sphérique/cylindrique située sur l'axe longitudinal (119) du miroir annulaire (135) sphérique et du miroir annulaire plat (138).

5. Tête de mesure selon la revendication 4, caractérisée par le fait que la surface cylindrique (147) de la lentille (132) est orientée en direction de la tache lumineuse de mesure (57).

6. Tête de mesure selon la revendication 4 ou 5, caractérisée par le fait que la tête de mesure alimente, à travers une fente d'entrée (59), un monochromateur qui est formé par un réseau (55) qui peut tourner autour d'un arbre (30), et par le fait que l'axe du cylindre correspondant à la surface cylindrique (147) de la lentille (132) est orienté perpendiculairement à l'arbre (30) du réseau et à la fente d'entrée (52).

7. Tête de mesure selon l'une des revendications 3 à 5, et la revendication 6, caractérisée par le fait que sur le chemin du faisceau lumineux de mesure est disposé un premier barreau de verre (148) qui présente, à ses extrémités, des surfaces cylindriques (154, 155) dont les axes des cylindres correspondants sont orientés perpendiculairement l'un à l'autre.

8. Tête de mesure selon la revendication 7, caractérisée par le fait que sur le chemin du faisceau lumineux de mesure, entre le premier barreau de verre (148) et la fente d'entrée (59) du monochromateur, est disposé un second barreau de verre (149) qui présente deux surfaces cylindriques (156, 157), dont la surface cylindrique (157), orientée vers la fente d'entrée (59), présente un axe de cylindre correspondant qui est orienté perpendiculairement à la fente d'entrée (59) du monochromateur (55), tandis que la seconde surface cylindrique (156) présente un axe de cylindre correspondant qui s'étend parallèlement à la fente d'entrée (59) et parallèlement à l'axe de la surface cylindrique (155), voisine, du premier barreau de verre (148).

9. Tête de mesure selon l'une des revendications 7 ou 8, caractérisée par le fait qu'à l'extrémité, située du côté de l'entrée de la lumière, du premier barreau de verre (148) est prévu un premier diaphragme à fente (152) et, à l'intérieur du premier barreau de verre, un second diaphragme à fente (153), qui est perpendiculaire au précédent et qui s'étend parallèlement à la fente d'entrée (59).

10. Tête de mesure selon l'une des revendications 6 à 9, caractérisée par le fait que, grâce à l'optique de mesure (116), une tache lumineuse de mesure, ronde, (57) donne comme image une ellipse dont le grand axe s'étend en direction de la fente d'entrée (59) du monochromateur (55) et dont le petit axe correspond à la largeur de la fente d'entrée (59).

Fig. 1

Fig. 2

**Fig. 3**

*Fig. 4*

Fig. 5

EP 0 327 499 B1